# EUROPÄISCHE PATENTANMELDUNG

(11) **EP 0 818 749 A2**
(43) Veröffentlichungstag der Anmeldung: **14.01.1998**
(21) Anmeldenummer: 97111625.6
(22) Anmeldetag: 09.07.1997
(51) Int. Cl.: G06K 7/06, G06K 7/08, G06K 7/10

(54) **Verfahren und System zum Sichern von Daten**

(30) Priorität: 12.07.1996 DE 19628122; 06.10.1996 DE 19641009; 24.12.1996 US 773763
(71) Anmelder: Dethloff, Jürgen, 22605 Hamburg (DE)
(72) Erfinder: Dethloff, Jürgen, 22605 Hamburg (DE)

(57) **Zusammenfassung**

Tragbare Datenträger mit einem integrierten Speicher werden für verschiedene Zwecke verwendet, beispielsweise zur Speicherung von persönlichen Krankheitsdaten oder zur Speicherung von Geldbeträgen. Dabei besteht die Gefahr, daß bei Verlust oder Diebstahl des Datenträgers Daten bzw. Geldbeträge für den rechtmäßigen Benutzer unwiederbringlich verloren gehen. Um diese Daten für den Benutzer zu sichern, wird erfindungsgemäß vorgeschlagen, zusätzlich zum Datenträger ein kleines Terminal zu verwenden, mit dem der Datenträger verbunden werden kann und wobei dann Daten vom Datenträger in das Terminal kopiert werden. Ein solches Terminal ist beispielsweise für bestimmte Arten von Datenträgern für die Bedienung und zur Anzeige von Geldbeträgen ohnehin notwendig. Falls nun der Datenträger verloren geht, können die Daten aus dem Terminal wieder zurückgewonnen werden.

## Beschreibung

Die Erfindung betrifft ein Verfahren zum Sichern von Daten, die in wenigstens einem Speicher eines tragbaren Datenträgers enthalten sind, sowie ein System zum Sichern von solchen Daten.

Tragbare Datenträger werden tur die Speicherung verschiedener Daten verwendet. Beispielsweise dienen solche Datenträger für die Speicherung von Krankheitsdaten von Personen, und inzwischen werden Datenträger auch für die Speicherung von Geldbeträge oder andere Werteinheiten darstellenden Daten verwendet. Diese letztere Art von Datenträgern wird auch als elektronische Geldbörse bezeichnet. Dabei stellt der Datenträger einen Wert entsprechend dem darin gespeicherten Geldbetrag oder den darin gespeicherten Werteinheiten dar, der bei einem Verlust oder einem Diebstahl des Datenträgers für den rechtmäßigen Besitzer verloren ist. Andererseits ist es denkbar, daß ein betrügerischer Besitzer Daten in dem Datenträger verändert, um höhere Werte vorzutäuschen und damit die kontoführende Bank oder den Kartenausgeber zu schädigen. Auch kann in betrügerischer Absicht bei Ersatzansprüchen von vorgeblich in Verlust geratenen Datenträgern ein höherer Wert, als er noch in dem Datenträger gespeichert war, geltend gemacht werden. Ebenso kann bei Datenträgern anderer Art der Verlust oder eine unberechtigte Veränderung von Daten unangenehme oder sogar schwerwiegende Folgen haben.

Aufgabe der Erfindung ist es daher, ein Verfahren anzugeben, mit dem die Daten auf einem Datenträger so gesichert werden, daß sie insbesondere bei einem Verlust des Datenträgers oder bei einer unberechtigen Veränderung wieder hergestellt werden können.

Zur Lösung dieser Aufgabe wird daher ein erstes Terminal verwendet, das mit dem Datenträger über Kontakte oder über elektrische oder magnetische Felder in Wirkverbindung gebracht werden kann. Es befindet sich im Besitz des rechtmäßigen Benutzers des Datenträgers und dient beispielsweise dazu, Daten im Datenträger anzuzeigen und bei entsprechender Bedienung des Terminals berechtigt zu verändern, beispielsweise Geldbeträge zu einem Kassenterminal eines Verkäufers zu übertragen. Dieses Terminal dient nun erfindungsgemäß zusätzlich dazu, die in dem Datenträger enthaltenen Daten zu speichern, so daß beispielsweise bei einem Verlust des Datenträgers die Daten im Terminal erhalten bleiben. Dabei wird davon ausgegangen, daß der Benutzer den Datenträger und das Terminal normalerweise an getrennten Stellen aufbewahrt. Die mit dem Datenträger verlorenen Daten können dann mit Hilfe des Terminals wieder hergestellt werden.

Es ist möglich, daß die Daten im Datenträger beispielsweise durch eine fehlerhafte Funktion oder eine Störung oder auch in betrügerischer Weise ohne Verwendung des ersten Terminals verändert worden sind und dadurch nicht mehr mit den im Terminal gespeicherten Daten übereinstimmen. Um diesen Fall erkennen zu können, ist es nach einer Ausgestaltung der Erfindung zweckmäßig, daß die im Datenträger zu ändernden Daten vor einer Änderung zunächst zum Terminal übertragen und mit den darin gespeicherten Daten verglichen werden. Nur falls dann eine Gleichheit festgestellt wird, kann der Datenträger zum Verändern von Daten angesteuert werden. Bei Ungleichheit wird dagegen ein Fehler gemeldet und jede weitere Funktion gesperrt.

Eine weitere Sicherung gegen Fehlfunktionen oder betrügerische Manipulationen ist nach einer weiteren Ausgestaltung der Erfindung dadurch möglich, daß die im Terminal gespeicherten Daten in gleicher Weise wie im Datenträger verändert werden und die veränderten Daten mit den vom Datenträger übertragenen veränderten Daten verglichen werden, bevor diese veränderten Daten im Terminal gespeichert werden. Auf diese Weise wird sichergestellt, daß sowohl der Datenträger als auch das Terminal ordnungsgemäß arbeiten. Bei einer Abweichung der Daten wird ebenso wie vorhergehend beschrieben ein Fehler gemeldet und jede weitere Funktion gesperrt.

Eine Ausnahme von der Forderung, daß die im Datenträger und im Terminal gespeicherten Daten übereinstimmen müssen, ist allerdings dann gegeben, wenn die Daten im Datenträger durch ein anderes Terminal berechtigt verändert worden sind. Dies wird selbstverständlich nur nach einer vorhergehenden gegenseitigen Authentitätsprüfung möglich sein. Damit in diesem Falle bei einer nachfolgenden Verbindung des Datenträgers mit dem ersten Terminal kein Fehler gemeldet wird, wird bei einer solchen Veränderung von Daten durch ein anderes Terminal der Datenträger so eingestellt, daß er bei der nachfolgenden Verbindung mit dem ersten Terminal einmalig ein Steuersignal überträgt, das das erste Terminal veranlaßt, die unmittelbar nach der Verbindung vom Datenträger zum Terminal übertragenen Daten ohne Prüfung abzuspeichern. Eine berechtigte Veränderung von Daten im Datenträger wird beispielsweise im Falle der elektronischen Geldbörse dann erfolgen, wenn ein neuer bzw. zusätzlicher Geldbetrag in den Datenträger eingespeichert wird.

Das bisher beschriebene erfindungsgemäße Verfahren ist besonders zweckmäßig, wenn der Datenträger als elektronische Geldbörse verwendet wird und derart aufgebaut ist, daß er einen Speicher enthält, der einen ersten und wenigstens einen zweiten Speicherabschnitt aufweist. Der erste Speicherabschnitt kann nur von außerhalb mit einem Geldbetrag gefüllt werden, während ein Geldbetrag, der zum Bezahlen in das Terminal eines Verkäufers übertragen werden soll, zunächst vom ersten Speicherabschnitt in einen zweiten Speicherabschnitt übertragen werden muß. Dies erfolgt mit Hilfe des ersten Terminals, das also bereits für diesen Zweck notwendig ist.

Das erste Terminal kann auf verschiedene Weise ausgebildet sein, wobei es aber stets eine Energiequelle enthält. Eine Möglichkeit besteht darin, es als kleines Taschengerät auszuführen, das sogar wesentlich kleiner sein kann als der Datenträger selbst, nämlich nur so groß, daß es mit den Verbindungselementen des Datenträgers wie z.B. Kontakte oder Spule verbunden werden kann. Ein solches Terminal kann beispielsweise als Schlüsselanhänger ausgeführt sein. Das erste Terminal kann auch als elektronisches Notizbuch oder Taschenrechner ausgebildet sein bzw. in ein solches Gerät oder in einen sogenannten "Personal Organizer" aufgenommen sein. Weiter kann es auch in einen PC (Personal Computer) integriert sein, insbesondere einen tragbaren PC. Auch kann es in ein Mobilfunk-Endgerät, ein sogenanntes Handy, aufgenommen sein. Die hier beispielsweise aufgezählten Geräte weisen alle für ihren Hauptzweck eine Tastatur und ein Anzeigeelement auf, die für die Zwecke des ersten Terminals mit verwendet werden können.

Alle Geräte, die über eine Verbindung zu einem Datennetz oder ein Telefonnetz wie ein Computer mit Modem oder ein Handy verfügen, können auch dazu benutzt werden, im Datenträger andere berechtigte Veränderungen, beispielsweise Entladungen, Aufladungen oder Nachladungen von Geldbeträgen oder anderen Werteinheiten, vorzunehmen. Allgemein gesagt können berechtigte Veränderungen vorgenommen werden von ersten Terminals in Ausführungsformen von Geräten, die in Verbindung beispielsweise mittels eines Telefon- oder Datennetzes mit Einrichtungen in Verbindung gebracht werden, die zur Abgabe und Übertragung von Befehlen zur Datenänderung im Datenträger wie Entladungen oder Aufladungen berechtigt sind. Eine derartige Einrichtung kann z.B. der Rechner der kontoführenden Bank oder eine entsprechende Einrichtung eines Anbieters von Waren oder Leistungen sein.

Alle Ausführungen des ersten Terminals setzen aber voraus, daß zwischen dem Datenträger und dem ersten Terminal eine eindeutige und überprüfbare Zuordnung bestehen muß, nämlich über im Datenträger und im Terminal gespeicherte geheime Daten, damit es nicht möglich ist, durch ein nicht berechtigtes Terminal Daten im Datenträger zu ändern oder Daten aus dem Datenträger in ein nicht berechtigtes Terminal zu übertragen.

Die Erfindung betrifft ferner ein System zum Sichern von Daten mit einem tragbaren Datenträger und einem damit zusammenarbeitenden Terminal sowie ein Terminal und einen Datenträger für ein derartiges System.

Ausführungsbeispiele der Erfindung werden nachstehend anhand der Zeichnung näher erläutert. Es zeigen
Fig. 1 ein schematisches Blockschaltbild eines Systems mit einem Datenträger und einem Terminal,
Fig. 2 ein Flußdiagramm, das die Folge der Funktionen in diesem System darstellt.

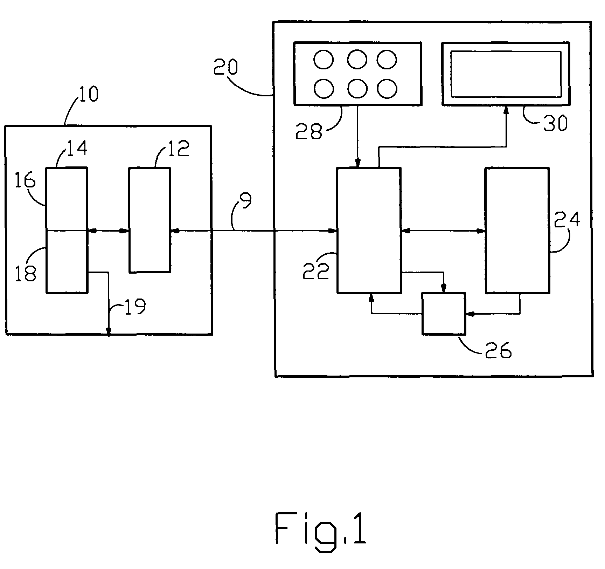

In Fig. 1 enthält ein Datenträger 10 eine Steuerschaltung 12 sowie einen Speicher 14, der hier zwei Abschnitte 16 und 18 aufweist. Dieser Datenträger 10 steht mit einem Terminal 20 in Wirkverbindung, wie durch die Verbindung 9 angedeutet ist. Diese Verbindung 9 kann durch Kontakte (hier nicht dargestellt) oder auch kontaktlos über elektromagnetische Wechselfelder verwirklicht sein. Das Terminal 20 enthält ebenfalls eine Steuerschaltung 22 sowie einen Speicher 24 und einen Vergleicher 26. Ferner sind im Terminal 20 eine Anzahl Drucktasten 28 und ein Anzeigeelement 30 vorgesehen. Die Steuerschaltung 22 steuert das Einschreiben und Auslesen von Daten im Speicher 24. Die Drucktasten 28 geben entsprechend ihrer Betätigung durch den Benutzer Signale an die Steuerschaltung 22 ab, während das Anzeigeelement 30 von der Steuerschaltung 22 Informationen empfängt und diese darstellt. Der Vergleicher 26 empfängt zu vergleichende Daten von der Steuerschaltung 22 und dem Speicher 24 und liefert ein Vergleichsergebnis an die Steuerschaltung 22. Die Steuerschaltungen 12 und 22 werden zweckmäßig durch Mikroprozessoren realisiert, die aufeinem Halbleiter, insbesondere zusammen mit dem Speicher 14 bzw. 24, integriert sind. Die Speicher 14 und 24 müssen dabei nichtflüchtige Speicher sein, die auch ohne Betriebsspannung ihren Inhalt erhalten, also insbesondere als EEPROM ausgeführt sein.

Im Datenträger 10, der in diesem Beispiel eine elektronische Geldbörse darstellen soll, steuert die Steuerschaltung 12 das Einschreiben und Auslesen von Daten im Speicher 14, die hier Geldbeträge darstellen. In der folgenden Beschreibung wird jedoch weiterhin der allgemeinere Ausdruck Daten verwendet. In den Speicherabschnitt 16 werden Daten praktisch nur eingeschrieben, die den jeweils insgesamt verfügbaren Geldbetrag darstellen. Vom Terminal 20 werden bei entsprechender Bedienung der Drucktasten 28 Steuersignale und Datensignale über die Verbindung 9 zur Steuerschaltung 12 im Datenträger 10 übertragen, die bewirken, daß die Steuerschaltung 12 einen Teilbetrag aus dem Speicherabschnitt 16 in den Abschnitt 18 überträgt, indem im Abschnitt 16 und 18 Daten entsprechend geändert werden, und nur aus dem Abschnitt 18 können, wenn der Datenträger anschließend mit einem (nicht dargestellten) Terminal z.B. eines Verkäufers in Verbindung gebracht wird, Geldbeträge über die Verbindung 19 nach außerhalb übertragen werden, wobei im Abschnitt 18 Daten entsprechend geändert bzw. gelöscht werden. Auf den Abschnitt 16 kann dabei nicht zugegriffen werden, so daß ein darin enthaltener Geldbetrag nicht direkt nach außerhalb übertragen werden kann.

Um in dem Datenträger 10 nur durch den rechtmäßigen Besitzer einen Geldbetrag vom Abschnitt 16 in den Abschnitt 18 zu übertragen und damit über diesen Geldbetrag zu verfügen, muß sichergestellt werden, daß diese Übertragung nur durch dasjenige Terminal 20 möglich ist, das sich ebenfalls im Besitz des rechtmäßigen Benutzers befindet. Dazu wird nach einer Verbindung des Datenträgers 10 mit dem Terminal 20 zunächst im bekannter Weise eine Autorisierungsprüfüng mittels geheimer Daten durchgeführt, die im Datenträger 10 und im Terminal 20 gespeichert sind, bevor eine Veränderung von Daten im Datenträger und im Terminal freigegeben wird. Diese Prüfung erfolgt automatisch.

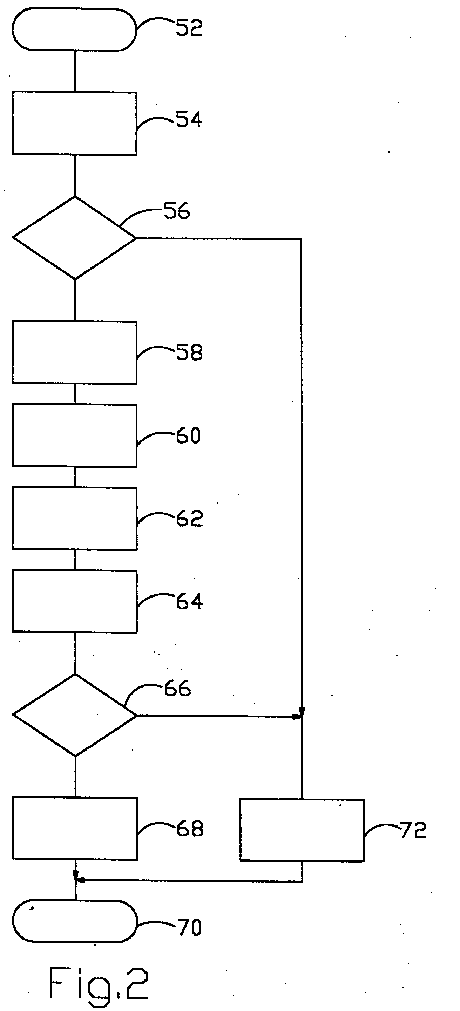

Danach erfolgt eine weitere Prüfung, die anhand des Flußdiagramms in Fig. 2 näher erläutert wird. Der Startpunkt 52 bezeichnet den Abschluß der vorhergehenden Autorisierungsprüfung und den Beginn der weiteren Prüfung. Block 54 gibt an, daß die Daten aus dem Abschnitt 16 des Speichers 14 im Datenträger 10 ausgelesen und über die Verbindung 9 zum Terminal 20 übertragen werden. Dort führt die Steuerschaltung 22 diese übertragenen Daten dem Vergleicher 26 zu und liest gleichzeitig aus dem Speicher 24 Daten aus, die ebenfalls dem Vergleicher 26 zugeführt werden. Diese aus dem Speicher 24 ausgelesenen Daten sollen eine Kopie der jeweils im Abschnitt 16 des Datenträgers 10 enthaltenen Daten sein, so daß der Vergleicher im Normalfall eine Gleichheit der beiden zugeführten Daten an die Steuerschaltung 22 meldet. Dieser Vergleich ist im Flußdiagramm mit Block 56 dargestellt. Wenn dieser Vergleich der Daten jedoch eine Ungleichheit ergibt, wird gemäß Block 72 eine Fehlermeldung auf dem Anzeigeelement ausgelöst, und danach ist die Prüfung beendet, wobei keine weitere Funktion in dem System aus Datenträger 10 und Terminal 20 mehr möglich ist.

Wenn der Vergleich der Daten Gleichheit anzeigt, geht der Ablauf zum Block 58 weiter, wobei ein Geldbetrag, den z.B.der Benutzer über die Drucktasten 28 eingegeben hat, im Datenträger 10 vom Abschnitt 16 in den Abschnitt 18 übertragen werden soll. Diese Eingabe veranlaßt die Steuerschaltung 22, Steuersignale und Datensignale zur Steuerschaltung 12 im Datenträger 10 zu übertragen, wodurch die Steuerschaltung 12 einen dem eingegebenen Geldbetrag entsprechenden Wert von den Daten im Abschnitt 16 subtrahiert und zu den Daten im Abschnitt 18 addiert. Dies wird durch den Block 60 in Fig. 2 angedeutet. Danach werden die veränderten Daten, die nach der Subtraktion im Abschnitt 16 enthalten sind, zum Terminal 20 übertragen wie durch den Block 62 angedeutet ist.

Im Terminal 20 hat die Steuerschaltung 22 ebenfalls den dem eingegebenen Geldbetrag entsprechenden Wert von den Daten im Speicher 24 subtrahiert und das Ergebnis dem Vergleicher 26 zugeführt, wie durch den Block 64 angegeben ist. Die vom Datenträger 10 übertragenen veränderten Daten werden nun ebenfalls dem Vergleicher 26 zugeführt. Bei richtiger Ausführung der beschriebenen Operationen im Datenträger 10 und im Terminal 20 meldet der Vergleicher 26 wieder Gleichheit der Daten an die Steuerschaltung 22. Daraufhin wird über die Steuerschaltung 22 das Einschreiben der veränderten Daten in den Speicher 24 ausgelöst, wie im Block 68 angegeben ist. Damit enthält der Speicher 24 wieder die gleichen Daten wie der Abschnitt 16 des Speichers 14 im Datenträger 10, so daß im fehlerfreien Fall das Terminal 20 stets die gleichen Daten enthält, d.h. denselben verfügbaren Geldbetrag wie der Datenträger 10. Wenn der Datenträger verlorengeht oder gestohlen wird oder durch äußere Einwirkungen die Daten in Datenträger verändert werden, ist somit anhand des Terminals jederzeit feststellbar, welches der zuletzt gültige verfügbare Geldbetrag war. Der Inhalt des Speichers 24 muß hierfür auslesbar sein, vorzugsweise über das Anzeigeelement 30. Der zuletzt gültige Geldbetrag kann dann bei Verlust des Datenträgers in einen neuen Datenträger von der kontoführenden Bank bzw. dem Ausgeber des Datenträgers eingeschrieben werden, so daß der rechtmäßige Benutzer des Datenträgers praktisch keinen Schaden erleidet. Ein Finder oder Dieb eines Datenträgers kann diesen nicht mißbräuchlich verwenden, da er nur mit Hilfe des richtigen Terminals über den im Datenträger gespeicherten Geldbetrag verfügen kann. Die kontoführende Bank erleidet dadurch ebenfalls keinen Schaden.

Es ist jedoch auch möglich, daß ein rechtmäßiger Benutzer in betrügerischer Absicht seiner Bank gegenüber behauptet, daß ihm der Datenträger, in dem noch ein größerer Geldbetrag gespeichert war, durch Diebstahl oder Verlust abhanden gekommen ist, obwohl dies tatsächlich nicht der Fall ist. Der betrügerische Benutzer würde dann von seiner Bank einen neuen Datenträger mit dem vom Terminal angezeigten Geldbetrag erhalten, so daß der Benutzer zweimal über diesen Geldbetrag verfügen könnte, nämlich mit beiden Datenträgern getrennt. Um dies zu verhindern, könnten die geheimen Daten für die Autorisierungsprüfung bei der Ausgabe beider Elemente durch die Bank, wobei unter Bank allgemein der Ausgeber des Datenrtägers zu verstehen ist, oder auf folgende Weise gespeichert werden.

Wenn ein neuer Datenträger erstmalig mit einem Terminal in Verbindung gebracht wird, gibt der Datenträger geheime Daten an das Terminal ab. Diese geheimen Daten werden im Datenträger beispielsweise durch einen Zufallsgenerator erzeugt und werden dann im Datenträger gespeichert, oder sie liegen bereits im Datenträger gespeichert vor, beispielsweise bei der Herstellung oder von der Bank darin eingeschrieben. Das Terminal empfängt diese geheimen Daten und speichert sie nach einer eventuellen Verarbeitung ebenfalls. Zusätzlich kann auch das Terminal weitere geheime Daten abgeben, die z. B. aus den empfangenen Daten abgeleitet sein können und die im Datenträger gespeichert werden, ggf nach einer vorausgegangenen Verarbeitung. Dies darf aber nur einmalig möglich sein und muß wenigstens im Datenträger gegen Wiederholung gesperrt sein, da sonst die Sicherheit gegen Betrug bei Verlust oder Diebstahl des Datenträgers gefährdet wäre. Durch eine erste Verbindung von Terminal und Datenträger wird also eine exclusive Zuordnung hergestellt, d. h. weder kann das Terminal hiernach mit einem anderen Datenträger noch umgekehrt zusammenwirken. Bei jeder Verbindung des Datenträgers mit dem Terminal überträgt das Terminal geheime oder/oder zufällige Daten zum Datenträger, der sie gegen seine gespeicherten geheimen Daten prüft. Bei erfolgreicher Prüfung überträgt ggf. der Datenträger weitere geheime Daten zum Terminal, und es kann die Veränderung von Daten im Speicher 14 freigegeben werden. Stattdessen kann auch vor der Freigabe der Veränderung eine Prüfung der Zuordnung mittels eines sog. Challenge-Response-Verfahrens auf der Basis der geheimen Zahlen mit zufälligen Daten erfolgen.

Die einzige Ausnahme hiervon ist gegeben,wenn unter geeigneten Sicherungsmaßnahmen nach Verlust eines von beiden Teilen ein legitimer Ersatz mit Autorisierung durch den Ausgeber dem noch vorhandenen anderen Teil exclusiv zugeordnet wird, so daß wiederum eine erneute exclusive Paarung entsteht. Die Zuordnung eines Terminals zu einem Benutzer sollte beim Ausgeber registriert sein, um Betrugsmöglichkeiten für den Fall zu verhindern, wenn ein betrügerischer Benutzer fälschlich behauptet, sein Terminal verloren zu haben.

In dem Ablauf gemäß dem Flußdiagramm in Fig. 2 dienen viele Schritte nur der Sicherheit gegen Fehlfunktion oder Betrug und können grundsätzlich teilweise oder ganz weggelassen werden. Die wesentlichen Schritte, die unbedingt durchgeführt werden müssen, um im Terminal 20 eine ständige Kopie der Daten im Speicherabschnitt 16 im Datenträger 10 zu erhalten, die den rechtmäßig verfügbaren Geldbetrag angeben, sind die Schritte 58 bis 62 und 68 in Fig.2.

Eine Ausnahme von der Forderung, daß im Terminal 20 stets eine Kopie der Daten des Datenträgers vorhanden sein muß, liegt darin vor, wenn in den Datenträger ein Geldbetrag von z.B. der kontoführenden Bank übertragen wird, der zu dem noch vorhandenen Geldbetrag addiert wird und über den insgesamt verfügt werden kann. Die Aufladung erfolgt mit einem entsprechenden Terminal, wobei eine Autorisierungsprüfung durchgeführt wird, die sich von der entsprechenden Prüfung beim Verbinden des Datenträgers 10 mit dem Terminal 20 unterscheidet. Durch das Übertragen des aufgeladenen Geldbetrags in den Datenträger weichen die Daten im Speicherabschnitt 16 im Datenträger 10 von den im Terminal 20 gespeicherten Daten ab. Damit in diesem Fall kein Fehler gemeldet wird, wenn der Datenträger 10 danach mit dem Terminal 20 in Verbindung gebracht wird, wird beim Übertragen des zusätzlichen Geldbetrags die Steuerschaltung 12 im Datenträger 10 so eingestellt, daß sie anschließend beim danach erstmaligen Verbinden mit dem Terminal 20 einmalig ein Steuersignal zum Terminal überträgt, wodurch dieses die Prüfung auf Datengleichheit unterdrückt, wenn vor der Veränderung der Daten im Datenträger der Inhalt des Speicherabschnitts 16 zum Terminal übertragen wird. Stattdessen wird dieser übertragene Inhalt in den Speicher 24 des Terminals eingeschrieben, und der weitere Ablauf wird dann wie ab dem Block 58 in Fig. 2 dargestellt durchgeführt. Die Wirksamkeit des Steuersignals ist zweckmäßig abhängig von einem positiven Ergebnis einer Prüfung auf exclusive Zusammengehörigkeit von Datenträger und Terminal.

## Patentansprüche

1. Verfahren zum Sichern von in einem Halbleiterspeicher eines tragbaren kartenförmigen Datenträgers enthaltenen, von außerhalb veränderbaren Daten gegen Verlust durch insbesondere Verlust des Datenträgers oder unberechtigte Veränderung der Daten, wobei der Datenträger mit einem ersten Terminal in Wirkverbindung gebracht wird und über dieses erste Terminal Daten im Speicher des Datenträgers veränderbar sind und nach jeder Veränderung dieser Daten mindestens ein Teil der geänderten Daten vom Datenträger automatisch zum ersten Terminal übertragen und darin gespeichert wird.

2. Verfahren nach Anspruch 1, wobei vor einer Veränderung der Daten im Datenträger über das erste Terminal vorgegebene, zu ändernde Daten vom Datenträger in das erste Terminal übertragen und mit im ersten Terminal gespeicherten Daten verglichen werden und nur bei Gleichheit die Veränderung von Daten im Datenträger über das erste Terminal freigegeben wird.

3. Verfahren nach Anspruch 1 oder 2, wobei im Terminal gespeicherte Daten in gleicher Weise verändert werden wie im Datenträger und die im Terminal veränderten Daten mit den vom Datenträger übertragenen veränderten Daten verglichen werden und nur bei Gleichheit dieser Daten die veränderten Daten im Terminal gespeichert werden.

4. Verfahren nach Anspruch 1, wobei die Daten in dem Datenträger über ein zweites Terminal nach einer Autorisierungsprüfung verändert werden und der Datenträger eingestellt wird, bei der nachfolgenden Verbindung mit dem ersten Terminal einmalig ein erstes Steuersignal zu übertragen, das das erste Terminal veranlaßt, vorbestimmte Daten aus dem Speicher des Datenträgers auszulesen und im ersten Terminal zu speichern.

5. Verfahren nach einem der Ansprüche 1 bis 4 für einen Datenträger zum Speichern von Geldbeträge darstellenden Daten, wobei der Speicher des Datenträgers einen ersten und wenigstens einen zweiten Speicherabschnitt aufweist, von denen
- in den ersten Speicherabschnitt von außerhalb einen Geldbetrag darstellende Daten im wesentlichen nur einschreibbar sind und
- aus dem zweiten Speicherabschnitt Geldbeträge darstellenden Daten nach außerhalb übertragbar sind und
Daten vom ersten Speicherabschnitt in den bzw. einen der zweiten Speicherabschnitte nur dann übertragbar und Daten vom Speicher des Datenträgers in das erste Terminal übertragbar und darin speicherbar sind, wenn der tragbare Datenträger mit dem ersten Terminal, das mit dem Datenträger über im Datenträger und im ersten Terminal gespeicherte Geheimdaten eine eindeutige und überprüfbare Zuordnung aufweist, in Wirkverbindung gebracht ist und das Terminal in vorgegebener Weise bedient wird.

6. Verfahren nach Anspruch 5, wobei zwischen dem Datenträger und dem ersten Terminal eine nicht aufhebbare eindeutige Zuordnung durch in beiden gespeicherte geheime Daten besteht und diese Zuordnung durch einen automatischen Austausch der geheimen Daten oder davon abhängiger Daten bei jeder Verbindung von Datenträger und erstem Terminal automatisch geprüft wird und eine Veränderung von Daten im Datenträger und im ersten Terminal nur bei erfolgreicher Prüfung freigegeben wird.

7. Verfahren nach Anspruch 5, wobei zwischen dem Datenträger und dem ersten Terminal eine aufhebbare und geändert erneut herstellbare eindeutige Zuordnung durch in beiden gespeicherte geheime Daten besteht und diese Zuordnung durch einen automatischen Austausch der geheimen Daten oder davon abhängiger Daten bei jeder Verbindung von Datenträger und erstem Terminal automatisch geprüft wird und eine Veränderung von Daten im Datenträger und im ersten Terminal nur bei erfolgreicher Prüfung freigegeben wird.

8. System zum Sichern von Daten mit einem tragbaren Datenträger, der einen ersten Halbleiterspeicher und eine erste Steuerschaltung enthält, die eingerichtet ist, um durch Signale von außerhalb Daten in den ersten Speicher einzuschreiben und/oder daraus auszulesen, und
mit einem ersten Terminal, das einen zweiten Speicher und eine zweite Steuerschaltung sowie Bedienungselemente und Anzeigeelemente enthält, wobei die zweite Steuerschaltung eingerichtet ist, um durch Signale von außerhalb und durch Betätigung der Bedienungselemente Daten von außerhalb in den zweiten Speicher einzuschreiben und auszulesen,
wobei der Datenträger und das erste Terminal miteinander in Wirkverbindung gebracht werden können und die erste Steuerschaltung eingerichtet ist, um nach Herstellen der Wirkverbindung Daten, die in ersten vorgegebenen Speicherplätzen des ersten Speichers enthalten sind, gemäß von der zweiten Steuereinrichtung zugeführten ersten Steuersignalen und Datensignalen zu verändern und die veränderten Daten abzuspeichern und außerdem an das erste Terminal zu übertragen, und die zweite Steuerschaltung eingerichtet ist, um die übertragenen Daten an vorgegebenen zweiten Speicherplätzen des zweiten Speichers einzuschreiben, wobei die veränderten Daten die zu sichernden Daten darstellen.

9. System nach Anspruch 8, wobei die erste Steuerschaltung eingerichtet ist, um nach dem Herstellen der Wirkverbindung die an den ersten Speicherplätzen enthaltenen Daten zum ersten Terminal zu übertragen, und die zweite Steuerschaltung einen Vergleicher enthält, um die an den zweiten Speicherplätzen enthaltenen Daten mit den übertragenen Daten zu vergleichen und erst nach positivem Vergleichsergebnis die ersten Steuersignale und Datensignale an den Datenträger zu übertragen.

10. System nach Anspruch 9, wobei die erste Steuerschaltung eingerichtet ist, um nach dem Verändern von Daten in den ersten Speicherplätzen diese veränderten Daten an das erste Terminal zu übertragen, und die zweite Steuerschaltung eingerichtet ist, um Daten in vorgegebenen zweiten Speicherplätzen des zweiten Speichers in gleicher Weise wie der Datenträger zu verändern und die veränderten Daten mit den vom Datenträger übertragenen Daten zu vergleichen und bei Gleichheit an den zweiten Speicherplätzen zu speichern.

11. Terminal in einem System nach einem der Ansprüche 8 bis 10.

12. Terminal nach Anspruch 11, das in ein weiteres datenverarbeitendes, Bedienungselemente und ein Anzeigeelement aufweisendes Gerät wie Rechner oder in ein Mobilfunk- oder Telefon- oder Daten-Endgerät aufgenommen ist.

13. Terminal nach Anspruch 11 oder 12, das in ein anderes Gerät aufnehmbar oder mit diesem verbindbar ist, das über eine Verbindung zu einem Datennetz verfügt und über ein solches Netz mit Einrichtungen verbindbar ist, die zur Anforderung von Daten eingerichtet und berechtigt sind zur Abgabe und Übertragung von Befehlen zur Datenänderung, auch zur Aufladung.

14. Terminal nach Anspruch 12, wobei das Gerät, in das das erste Terminal aufgenommen ist, über eine Verbindung zu einem Datenübertragungsnetz verfügt und mit Einrichtungen verbindbar ist, die zur Anforderung von Daten und/oder zur Abgabe und Übertragung von Befehlen zur Datenänderung, auch zur Aufladung, berechtigt sind.

15. Datenträger in einem System nach einem der Ansprüche 8 bis 10.
